# EUROPEAN PATENT SPECIFICATION

(11) **EP 0 516 891 B1**
(45) Date of publication and mention of the grant of the patent: **24.07.1996**
(21) Application number: 91201360.4
(22) Date of filing: 04.06.1991
(51) Int. Cl.: A01F 12/18, A01F 12/44

(54) **Pivotable grain and chaff elevator**
Schwenkbarer Elevator für Getreide und Spreu
Elévateur pivotant à grains et menues pailles

(43) Date of publication of application: 09.12.1992
(73) Proprietor: NEW HOLLAND BELGIUM N.V., B-8210 Zedelgem (BE)
(72) Inventor: van Eekcke, Roger H., B-8370 Blankenberge (BE); Desnijder, Dirk J., B-9032 Wondelgem (BE)
(74) Representative: Vandenbroucke, Alberic

(56) References cited:
- EP-A- 0 096 923
- DE-A- 1 906 427
- FR-A- 2 305 118
- GB-A- 1 064 652
- GB-A- 1 423 325
- US-A- 1 799 306
- US-A- 1 838 451
- US-A- 2 166 416
- US-A- 3 412 735
- US-A- 4 915 671

## Description

The present invention relates generally to crop harvesting machines, commonly referred to as combines, and, more particularly to an improved access to the threshing and separating mechanism thereof by means of pivotable conveyor means provided thereunderneath.

In known combine harvesters the threshing mechanism usually takes the form of a rotary cylinder cooperating with a concave behind which is disposed the separating mechanism in the form of a rotary straw beater and reciprocating or shaking straw walkers. Normally, in front of the threshing mechanism, a feeder house is provided which is operable to receive severed crop material from a header and to convey said material rearwardly to the threshing mechanism. The feeder house commonly comprises a chain and slat apron conveyor which releases the conveyed crop material in front of the threshing cylinder by which it subsequently is engaged and entrained between said cylinder and the threshing concave for starting the threshing and separating operation. Underneath the threshing and separating mechanism, a reciprocating, corrugated grain pan often is provided for transporting the separated grain together with chaff material towards a cleaning mechanism of the combine harvester.

When the threshing concave requires attention e.g. for cleaning purposes or a general inspection, some problems could be faced for reaching the concave area in a convenient manner. Some combine harvesters are provided with inspection covers at one or both lateral sides of the machine, but access towards the concave area from that position is rendered difficult not only by the location of drive belts and chains which extend along the combine sides but also by the presence of the front traction wheels which normally conceal a large part of the threshing area as seen from the side of the combine harvester. Moreover, large capacity combines normally have a threshing mechanism of a considerable transverse width, which anyhow would make it difficult to reach the middle portion of the threshing concave of such harvesters from a side position.

Gaining full access to the concave from the rear side of the machine is feasible but hardly recommendable as, to this end, the operator would have to crawl over the cleaning sieves and the rear part of the grain pan, what not only could damage those machine components but moreover could lead to personal injury. In any case, all necessary activity in the concave area would have to be carried out from a very uncomfortable position and in an unhealthy, mostly dusty environment. Considering the above, an operator will be reluctant to gain access to the threshing concave in such a manner.

There still remains the front side of the combine harvester from where the threshing concave could be reached. Indeed, in the transition area between the feeder housing and the threshing mechanism, a stone trap normally is provided behind which the threshing concave extends rearwardly. As has been proposed in EP-B-0.096.923, said stone trap is pivotally and detachably secured to the combine frame so that, after removal of the stone trap from its operative position, the threshing concave can be reached from underneath the feeder housing, which thereto has been moved to a fully raised position.

Although the foregoing arrangement provides an improved access to the threshing concave in comparison to the other arrangements, it nevertheless still suffers from the disadvantage that no immediate and readily accessible entrance is available as for each inspection of the concave the stone trap first has to be emptied and removed before access can be obtained. Moreover, once the stone trap removed, it is found that entering the space between the threshing mechanism and the grain pan from the front is not ideal as only the front portion of the threshing concave can be observed.

The threshing concave can be approached still from another direction, namely from underneath the grain pan. An arrangement of that kind is depicted in GB-A-1.423.325, which proposes to provide a removable grain pan section in the area generally vertically underneath the threshing concave. Such an arrangement has the advantage that a full view on the threshing and separating mechanism is achievable, but nevertheless suffers from the drawback that the access is not readily accessible as it takes some time to release and remove said grain pan section. Moreover, slight deformations of the grain pan structure or the occurrence of dirt on the grain pan surface may hamper the removal of a part of said grain pan.

Instead of a grain pan, an apron conveyor me be installed below the threshing and separating mechanism for receiving and transporting the separated grain and chaff as disclosed in US-A-2.166.416. Herein the conveyor is installed within a fixed frame or housing. Access can be gained to the concave by removing the bottom plate of the housing and pivoting down a portion of the conveyor structure. It is thus necessary to detach two separate elements on the lower side of the machine before one can reach the concave area, so that no immediate and readily accessible entrance is available.

It is therefore the objective of the present invention to overcome the aforementioned drawbacks by providing an improved access capability to the threshing and separating area of a combine harvester, which is readily and easily accessible by the combine operator.

According to the present invention a combine harvester is provided comprising :
- threshing and separating means including a rotatable threshing drum and a cooperating concave for threshing harvested crop material therebetween and separating wanted grain together with chaff material through the concave,
- conveyor means for receiving the separated grain and chaff material from the threshing and separating means and conveying this separated grain and chaff material towards a further processing means of the combine harvester; said conveyor means including an endless apron conveyor extending around two spaced apart axes.

Said combine harvester is characterised in that:
- said apron conveyor is installed in a self-supporting housing, and
- said apron conveyor and said housing are pivotable as a unit around at least one of said axes between an operative, material receiving position and an inoperative, retracted position; the arrangement being such that, in the inoperative, retracted position the threshing and separating means are readily accessible for servicing.

Said endless apron conveyor has its material receiving end generally vertically below the threshing means and is inclined rearwardly and upwardly relative to the fore-and-aft extending axis of the harvester from said material receiving end to a material discharge end. The spaced apart axes extend transversely at said receiving and discharge ends whereby the conveyor is pivotable around the uppermost axis. Upon pivoting the conveyor towards its inoperative position, the threshing means are readily accessible in a generally vertical, upward direction.

A combine harvester in accordance with the present invention will now be described in greater detail, by way of example, with reference to the accompanying drawings, in which :
Figure 1 is a schematic side elevational view, partially in section, of a combine harvester incorporating the present invention;
Figure 2 is a side elevational view, on a larger scale, of the rearward part of the elevator housing and the threshing and separating mechanism;
Figure 3 is a section on the line III-III of Figure 2;
Figure 4 is a side elevational view, on a larger scale, of a stone trap of the combine harvester;
Figure 5 shows the stone trap as seen in the direction of arrow F in Figure 4;
Figure 6 is a side elevational view, on a larger scale, of a grain collecting conveyor and the forward part of the cleaning mechanism of the combine harvester;
Figure 7 is a partial, curtailed section on the line VII-VII of Figure 6; and
Figure 8 is a side elevational view, on a larger scale, of an alternative stone trap arrangement.

In the following description, terms such as "forward", "rearward", "left", "right", etc... are used, which are words of convenience and which are not to be construed as limiting terms.

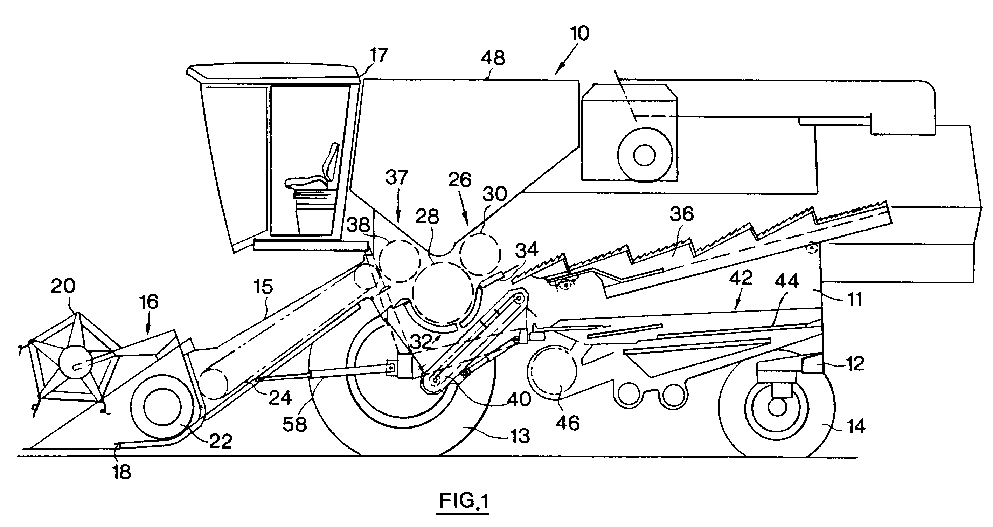

Referring now to the drawings and particularly to Figure 1, a schematic side elevational view, partially in cross section, of a crop harvesting machine 10, commonly referred to as a self-propelled combine harvester, can be seen.

The combine base unit 11 comprises a wheeled frame or housing 12 mobilely supported on a front pair of traction wheels 13 and a rear pair of steerable wheels 14 for movement over a field to harvest crop material. Pivotally mounted to the front of the base unit 11 is a feeder house 15 on the front of which is mounted a crop harvesting header 16 of conventional design.

In general, the header 16 includes a forwardly disposed reciprocating cutterbar 18 for severing crop material from the stubble. A reel 20 is disposed above and forwardly of the cutterbar 18 to sweep crop material thereover and transport it rearwardly to a consolidating auger 22 where it is converged centrally of the machine and then elevated by an elevator 24 of conventional construction in the feeder house 15 to threshing and separating means indicated generally at 26. Basically, the threshing and separating means 26 consist of a threshing cylinder 28 and a straw beater 30, provided respectively with cooperating concave means 32 and 34, and a set of longitudinally extending straw walkers 36. Inbetween the discharge end of the elevator 24 and the threshing cylinder 28, deflector means 37, comprising an additional rotor 38, are provided of which the function will be described furtheron.

Most of the grain is separated from the straw by the threshing cylinder 28 and associated concave means 32. Straw material issuing from the threshing means 28, 32 is subjected to the action of the straw beater 30 and passes therefrom to the straw walkers 36 which effect further separation of grain from the remainder of the crop material. Wanted grain together with chaff material which are separated through the concave means 32 and 34, fall onto a conveyor 40 and are transported towards a cleaning apparatus 42, which comprises sieve means 44 and a cleaning fan 46. The sieve means 44 are oscillated generally back-and-forth for moving the grain therealong while permitting the passage of cleaned grain by gravity therethrough. The grain on the sieve means 44 is subjected to a cleaning action by the fan 46 which serves to blow air through said sieve means 44 in order to remove the chaff and other impurities, such as dust , from the grain by making this material airborne for discharge from the machine. Clean grain is collected underneath the sieve means 44 from where it subsequently is transferred to a grain tank 48 on top of the combine base unit 11.

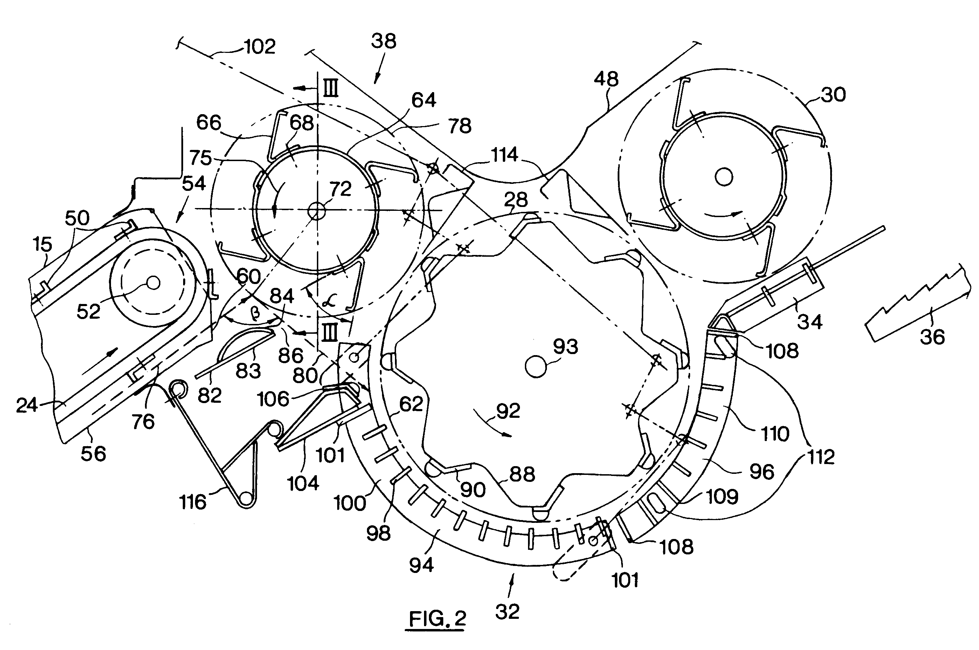

Turning now to figure 2, the configuration of the threshing and separating means 26 will be described in further detail. Typically, the elevator 24 in the feeder house 15 is in the form of an endless chain and slat apron conveyor comprising transverse slats 50. Generally, the apron conveyor 24 is driven by a drive shaft 52 positioned at the rearward end 54 of the feeder house 15, the sense of rotation being such that the conveyor 24 operates in an undershot manner, i.e. crop material engaged thereby is conveyed upwardly inbetween the underside of the apron conveyor 24 and a bottom plate 56 of the feeder house 15. The orientation of the feeder house 15 relative to the combine base unit 11 and hence the height of the header 16 relative to the ground is controlled by a pair of hydraulic lift cylinders 58 (shown in Figure 1) interconnecting the feeder house 15 and the base unit 11. By extending the cylinders 58 and pivoting the feeder house 15 about the drive shaft 52, the header 16 can be lifted from the ground.

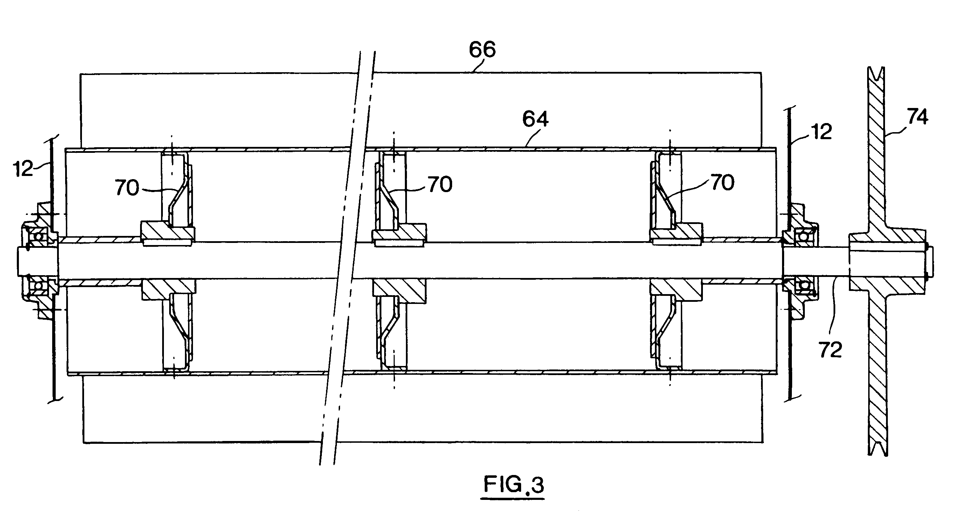

Crop material transported by the conveyor 24 travels through a crop discharge opening 60 at the rear end 54 of the feeder house 15 towards the rotor 38 already referred to. An important function of the rotor 38 is to act as a deflector beater for deflecting the layer of crop material issuing at the discharge opening 60 towards an inlet gap 62 between the threshing cylinder or drum 28 and the concave means 32 and located slightly below the horizontal plane through the centre of the drum 28. To this end, the deflector beater 38 has a tubular body 64 on which deflector plates 66 are mounted at equiangularly spaced intervals, the plates 66 extending the full length of the body 64 and being secured thereto by bolts 68. As can be observed in Figures 2 and 3, the tubular body 64 is formed by two half-cylindrical parts, each having a recessed portion at only one longitudinal side thereof for receiving the non-recessed side of the adjacent part and whereby both parts are bolted to flanges 70 provide at the inner side of the body 64. Preferably, weld nuts are secured to the inner side of both said parts receiving the bolts 68, thereby increasing serviceability of the deflector plates 66. The deflector beater 38 is drivingly connected to a shaft 72, extending centrally through the flanges 70 and rotatably supported by the side walls of the combine frame 12, at one side of which a pulley 74 is provided for driving the shaft 72 in a direction as indicated by arrow 75.

Said shaft 72 is disposed at an elevated level relative to the drive shaft 52 of the apron conveyor 24, resulting in a configuration in which the flow of crop material through the elevator discharge opening 60 (indicated by dashed arrow 76) impinges upon a lower quadrant of the deflector beater 38 in which the deflector plates 66 are rotating downwardly. Crop material intersecting the outline 78 generated by the rotating deflector plates 66 is deflected tangentially downwardly relative to said outline 78 as indicated by dashed arrow 80, straight into the inlet gap 62 mentioned above.

It will be appreciated that the apron conveyor 24 transports crop material upwardly in a dense layer since the transport area is confined by the bottom wall 56 on the one hand and the lower run of said conveyor 24 moving closely above the bottom wall 56 on the other hand. It has been found essential for the efficiency of the deflector beater 38 to present this layer of crop material to the beater 38 still in a dense, confined manner as, under such conditions, the beater 38 has the most effective impact on said layer. If, on the contrary, the layer of crop material would be allowed to expand freely in front of the beater 38, then the operation of the latter would be hampered in that the beater 38 would have to recompress the layer before transporting it further and hence energy would be lost.

Provisions therefore are taken to prevent expansion of the layer in the transition area between the crop discharge opening 60 and the impact area on the beater 38; provisions which include a detaining element 82, extending over the full width of said discharge opening 60 and being formed by a hollow-cored member having a flat portion 83 with a part-cylindrical portion 84 on top. The detaining element 82 is disposed such that the top portion 84 generally registers with the bottom wall 56 so that the layer of crop material leaving the feeder house 15 is prevented from expanding downwardly whereby the conveyor 24 otherwise would loose its positive control over the confined transport. The detaining element 82 further is disposed to extend towards the deflector beater 38, whereby a gap 86 is build of a width preferably equal to the distance measured between the slats 50 of the lower run of the conveyor 24 and the bottom plate 56, so as to preserve a constant thickness of the layer of crop material along its path around the beater 38.

The curvature of the top portion 84 of the detaining element 82 serves a threefold purpose. First of all, the front part of the top portion 84 ensures a smooth reception of crop material leaving the feeder house 15, even if the orientation of the latter is varied during operation. Secondly, the rearward part of the top portion 84 defines, in conjunction with the beater 38, the width of the discharge gap 86 and finally, the transitional part between the front and rearward parts helps to fluently divert the layer of crop material from its initial upwardly inclined direction 76 towards its downwardly inclined direction 80.

Layer expansion in an upward direction in the transitional area between the conveyor 24 and the beater 38 is substantially prevented by providing the beater 38 in the immediate vicinity of the outline generated by the conveyor slats 50, so that said transitional area is kept confined. At the same time , the beater 38 acts as a scraper element to reduce back-feeding of crop material over the conveyor 24.

The trajectory 80 of the crop towards the inlet gap 62 thus mainly is determined by the cooperating action of the deflector beater 38 on the one hand and the crop detaining element 82 on the other hand; the latter element 82 being fixedly secured to the combine frame 12 and hence having a fixed orientation relative to the deflector beater 38. Consequently, if the working orientation of the feeder house 15 relative to the combine frame 12 is altered e.g. due to providing larger or smaller sized tyres, the crop trajectory behind the deflector beater 38 is hardly influenced. This is of great importance to the threshing efficiency of the threshing drum 28 since it has been experienced that projecting the layer of crop material against the front face of a threshing drum 28 before it is entrained into the concave inlet pinch 62, is not as efficient what threshing capacity is concerned as projecting a dense layer of crop straight into said inlet pinch 62. In the latter case, the rubbing action of the threshing cylinder 28 on the crop is far better and that in essence determines the threshing efficiency.

Although the beater 38 is depicted in Figure 2 equipped with four deflector plates 66, it will be appreciated that the number of plates 66 may vary therefrom. Preferably however, this number is not reduced below four, in order to ensure a controlled grip of the plates 66 on the layer of crop material. The angle α of each plate 66 to the tangent of the body 64 is approximately 30°. Although this angle has been found suitable, it should be understood that other angles are possible and that also the shape of the deflector plates 66 may be varied substantially. As an example, the plates 66 may be wound spirally around the tubular body 64; each plate 66 comprising two oppositely wound flights which extend from the middle of the deflector beater 38 towards each respective end thereof. Such an arrangement could be advantageous for spreading the crop more evenly over the inlet 62 of the threshing cylinder 28 when the elevator 24 is unevenly loaded.

Rearwardly of the deflector beater 38, the threshing cylinder 28 is provided, which comprises flanges 88 and raspbars 90 mounted thereon. The threshing cylinder 28 is rotated in the direction of arrow 92 around axis 93, extending parallel to but at a lower level relative to as well the shaft 72 of the beater 38 as the drive shaft 52 of the apron conveyor 24. The threshing cylinder 28 partially is positioned underneath the deflector beater 38 for, on the one hand, reducing the distance between the discharge end 54 of the feeder house 15 and the threshing inlet 62, and, on the other hand, enlarging the available space inbetween the feeder house 15 and the threshing cylinder 28 in order to create the possibility to mount a deflector beater 38 with a considerable diameter, so as to optimize the impact thereof on the transported layer of crop.

As such, a configuration is obtained whereby the inlet gap 62 at the forward portion of the conveyor means 32 is located vertically underneath the rearward part of the deflector beater 38 and whereby the enclosed angle between the line connecting shaft 52 and 72 on the one hand, and the line connecting shaft 72 and axis 93 on the other hand, is in the range of 100° to 140°. Extrapolating the foregoing to the path followed by the layer of crop material, an enclosed angle β between arrow 76 and 80 is found in the range of 80° to 120°.

The concave means 32, extending around the threshing cylinder 28 over an angle of approximately 180°, is composed of two individual concave portions : a leading concave 94 at the inlet of the concave means 32 and a trailing concave 96 at the outlet thereof. The leading concave 94 comprises transverse threshing bars 98 mounted edge-on in a frame with arcuate side members 100 and front and rear transverse bars 101. To complete the concave, thereby forming a grid structure, curved slats and wires (not shown) are provided parallel to the side members 100. Although large quantities of grain are already separated through the leading concave 94, the main function thereof nevertheless consists in threshing the harvested crop material, as can be seen from the aggressive positioning of the threshing bars 98 which extend beyond the curved upper surface of the side members 100.

The leading concave 94 is adjustable relative to the threshing cylinder 28 for adjusting the clearance therebetween to suit the type of harvested crop and the crop condition; a clearance which may vary from a few millimetres for harvesting small seeds to about 40 mm for harvesting corn. To this end, the concave 94 is adjustably supported at its forward and rearward end and is adjustable by actuation of a rod and bell crank arrangement generally indicated by the chain line 102, either manually operated from the operators cab 17 or by a remote controlled electric actuator (not shown).

Rigidly attached to the front transverse bar 101 of the concave 94 is a transition beam 104 with an angled upper surface of which one side slants downwardly towards the inlet gap 62 in order to constitute a guiding surface for the crop material which is projected from the deflector beater 38. Under certain operating conditions, e.g. when harvesting " tough " crops which are difficult to thresh, it has been found advantageous to install an additional rasp bar 106 on the upper surface of the beam 104 with the rasps thereof facing in the direction of the threshing cylinder 28 in a manner such that the rotating rasp bars 90 of the latter cooperate with the stationary rasp bar 106 to already effect a fierce threshing action before the crop reaches the threshing concave 94. The transition beam 104 is shaped to directly receive the additional rasp bar 106 and orient it correctly without the need of any connecting joints. The rasps on said rasp bar 106 not necessarily extend parallel to the fore-and-aft axis of the combine harvester, but may diverge from the middle towards the respective sides thereof to, on the one hand, improve the threshing effect and, on the other hand, induce a spreading effect on the layer of crop material.

Turning again to the concave means 32, it is seen that the leading concave 94 envelops the threshing cylinder 28 over an arc of approximately 100° which is a commonly used dimension for a threshing concave. However, as already indicated, the threshing cylinder 28 is provided with a further concave 96 which closely adheres to and extends from the leading concave 94 over a further arc of approximately 80°. Said concave 96 comprises front and rear transverse bars 108, transverse slats 109 and arcuate side members 110 with curved slats and wires (not shown) inbetween. In this respect, both concaves 94 and 96 look rather similar. There are however some important differences in that first of all the transverse slats 109 do not extend beyond the curved, upper surface defined by the arcuate side members 110 and therefore are not aggressive on the layer of crop passing thereover. Furthermore, the circumferential distance measured between adjacent transverse slats 109 on the one hand and the transversely measured distance between adjacent fore-and-aft extending wires on the other hand are twice as large as the corresponding distances measured on the leading concave 94. It thus will be appreciated that, although some threshing activity still is experienced between the cylinder 28 and the concave 96, the latter in essence acts as a separating grid for separating the wanted grain from the straw material.

As seen in cross section, the trailing concave 96 has a front portion concentrically positioned relative to the cylinder 28, while a rearward portion at the outlet of said concave 96 flares radially outwardly relative thereto in order to attenuate the transition with the concave 34 underneath the straw beater 30. By this token, excessive straw breakage resulting from angular turns is avoided. As best can be seen in Figure 2, said outlet of the concave 96 is located slightly above the horizontal plane through the axis 93 of the drum 28.

During operation, the position of the trailing concave 96 relative to the cylinder 28 is fixed. A clearance between both elements of about 20 mm has been found to be suitable for most crop conditions. The setting of the trailing concave 96 is not as critical as the setting of the leading concave 94 as a result of the different functions that they have to perform ( separating vs. threshing ). Pre-adjustment of said clearance nevertheless is made feasible however by providing elongated slots 112 in the side walls of the frame 12 through which bolts are extended for fixing the concave 96 in any desired position. In conditions where the clearance of the leading concave (94) should be larger than the preset clearance of the trailing concave (96), said leading concave (94) may be adjusted askew relative to the threshing cylinder (28) whereby the clearance inbetween diminishes from the inlet gap (62) towards the outlet of said concave (94). The clearance at said outlet preferably is taken identical to the clearance of the trailing concave (96) so as to obtain a soft transition between both concaves (94 and 96).

The position of the threshing cylinder 28 relative to respectively the deflector beater 38 and the straw beater 30 has been chosen such that the outlines generated by said rotating elements closely approach one another. As a consequence, the deflector beater 38 is combed off at its rearward side by the cylinder 28 while the straw beater 30 in turn does the same on the backside of the cylinder 28. This configuration aims to avoid backfeeding and wrapping of straw material around the rotary structures. In addition thereto, rigid scraper plates 114 have been provided above the cylinder 28 to further improve the foregoing action. The diameter of the deflector beater 38 is about the two thirds of the diameter of the threshing drum 28, so that the latter is able to comb off a rather substantial area of the former.

Crop material issuing from the threshing cylinder 28 is guided by the straw beater 30 over the concave 34 towards the straw walkers 36, meanwhile further separating grain from the straw material. In order to reduce costs of parts and accessaries, the straw beater 30 may be constructed partially or even completely identical to the deflector beater 38.

The rotary elements of the threshing and separating mechanism 26 are all either directly or indirectly driven from a common main drive shaft (not shown) of the combine harvester 10, which rotates at about 1000 RPM under full load of the combine harvester engine. All said rotary elements are coupled in pairs in the following sequence. A first drive, extending from the main drive shaft to the straw beater 30, comprises a variator mechanism so that the drive speed of the straw beater 30 may be varied from 480 RPM to 1425 RPM. The straw beater 30 in turn drives the threshing cylinder 28 in a range from 420 RPM to 1250 RPM. Still further, the deflector beater 38 is driven from the threshing cylinder 28 at a speed varying from 140 RPM to 420 RPM. For harvesting certain types of vulnerable crops, e.g. soybeans, an additional speed reducer is operatively interconnected between the main drive shaft and the beater 30 so that the drive speed of all the rotors in front thereof are reduced by half. The drive shaft 52 of the straw elevator 24 is directly coupled to the main drive shaft and as such is driven at a fixed speed of 390 RPM.

Expressing the foregoing RPM 's in circumferential speed, this means that the conveyor slats 50 are moving at 2.7 m/s, and when disregarding the additional speed reducer, the deflector beater 38 and the threshing cylinder have a circumferential speed varying respectively from 3 to 9 m/s and from 13 to 40 m/s. It consequently will be observed that the circumferential speeds are increased from the elevator 24 over the deflector beater 28 towards the threshing cylinder 28, thereby improving on the one hand the transporting capacity of the arrangement and on the other hand the threshing efficiency of the threshing cylinder 28. It indeed has been experienced that increasing the speed of the layer of crop material fed into the gap 62 between the threshing drum 28 and the concave 94 has also a favourable effect on threshing efficiency.

Since the deflector beater 38 is drivingly dependent from the threshing cylinder 28, any variation of the drive speed of the latter automatically results in a corresponding change in speed of the former, gearing the operation for one another under all conditions.

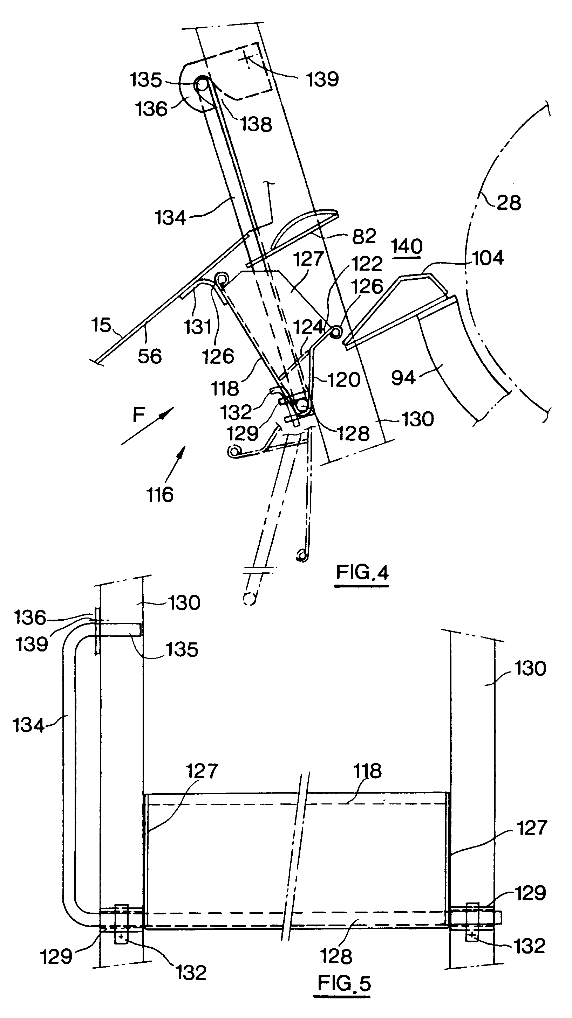

Viewing now the transition area between the deflector beater 38 and the threshing cylinder 28, a stone trap 116 is provided to collect and store stones and other hard foreign objects which accidentally are picked-up by the header 16 and fed rearwardly to the threshing and separating mechanism 26. Referring particularly to Figures 4 and 5, the stone trap 116 comprises a transversely extending shaped plate having a downwardly inclined front face 118, an almost vertical portion 120 and a rearwardly and upwardly inclined portion 122. In alignment with the portion 122 and extending towards the front, a bridging plate 124 is provided. The front plate 118, together with the plate 124 and the rearward portion 122, define a V-shaped trough in which the foreign objects are collected. The bent edges on the front plate 118 and the rearward portion 122 are intended to give greater strength to the structure. To complete the trough, meanwhile adding further rigidity thereto, side walls 127 are provided at the transverse opposite ends thereof. The front plate 118 carries a flexible sealing strip 131 which shoulders against the bottom plate 56 of the feeder house 15 in whatever position thereof.

The stone trap 116 is pivotable as a unitary structure around a transverse pivot axis at the inner side of the bent between the front plate 118 and the portion 120. Shaft means 128, either comprising stub shafts (not shown) at each side of the stone trap 116 or a single elongate rod 128, as depicted in Figure 4, are coincident with said pivot axis and are pivotally supported by two U-shaped brackets 129 attached to the front frame members 130. Keys 132 are inserted through aligned apertures in the limbs of the brackets 129 to hold the shaft 128 in place. The shaft or rod 128 is welded or otherwise secured at the bottom end of the front plate 118 across the transverse width thereof.

The stone trap 116 can be moved between a stone-collecting position and a stone-dumping position, respectively shown in full and dashed lines in Figure 4, by means of a handle 134 at the right hand side of the combine harvester 10. Said handle 134 may be attached to any part of the stone trap 116, but preferably is formed by an elongate extension of the rod 128, extending at a right angle relative thereto. The top portion 135 of the handle 134 is bent inwardly, parallel to the front face of the right hand side frame member 130, in order to form an abutment for the handle 134 when the stone trap 116 is closed. A latch member 136 with an open-ended curved slot 138 is pivotally attached at 139 to the frame member 130 for retaining the stone trap 116 in its stone-collecting position.

Foreign objects, entering the threshing mechanism, are hit by the threshing bars 90 of the threshing cylinder 28 and are thereby thrown through the stone trap inlet 140 which is defined at the top side by the flat portion 83 of the detaining element 82, extending towards the bent edge 126 of the front plate 118, and at the bottom side by the angled portion of the transition beam 104, against which the bent edge 126 of the plate 122 rests. The inlet 140 thereby constitutes a true extension to the trough of the stone trap 116 so that the stone-catching volume is more than doubled.

The stone trap 116 can easily be emptied by unlatching the latch member 136 and manually pulling the handle 134 forwardly to thereby pivot the stone trap 116 to its stone-dumping position. In an alternative embodiment (not shown), an electric or hydraulic actuator may be connected to the handle 134, enabling the combine operator to pivot the stone trap 116 back and forth between its open and closed positions without leaving the cab. In such an arrangement, the latch member 136 would not be required.

It will be appreciated from the foregoing that crop material conveyed towards the threshing cylinder 28 has to cross a transversely extending open space which is formed by the stone trap inlet 140. Accordingly, once the crop material has been impelled and released by the deflector beater 38 through the gap 86 with the detaining element 82, it is freely flowing across said inlet 140 towards the threshing cylinder 28, without being guided by a rigid wall element.

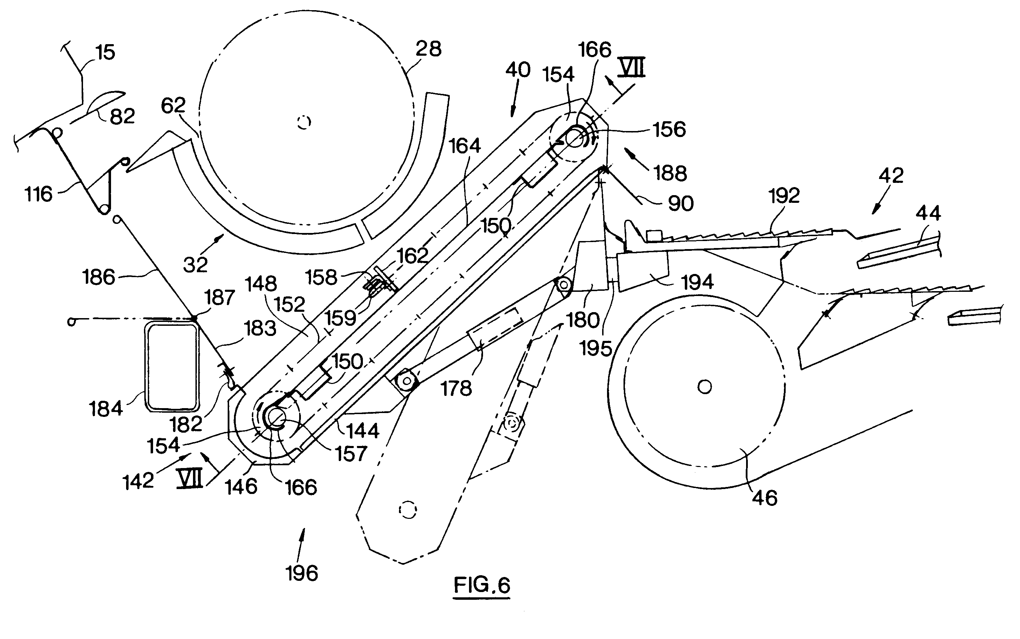

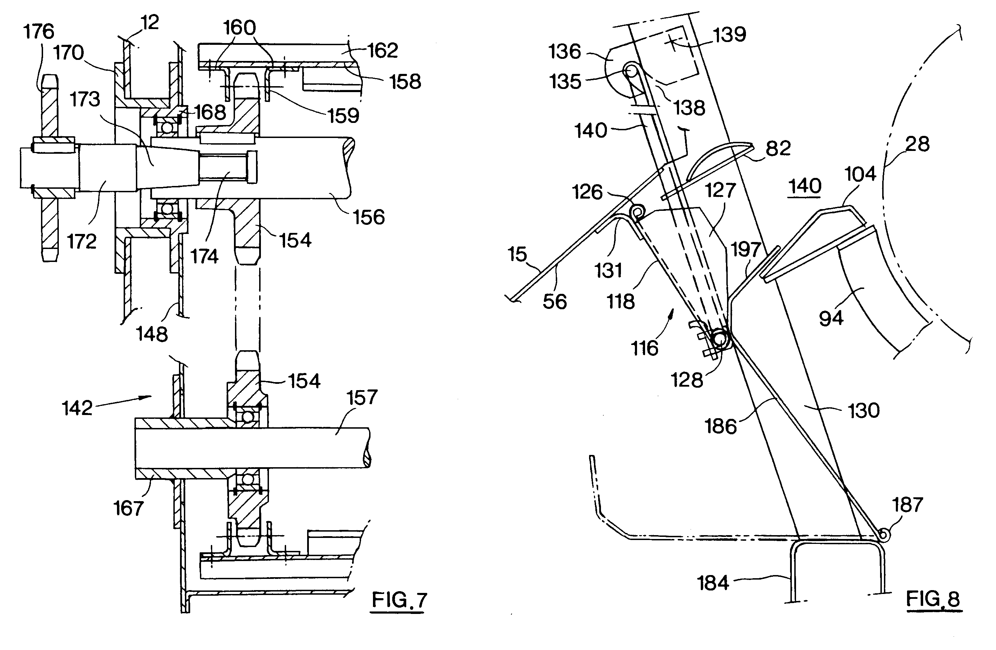

Grain and chaff material separated through the concaves of the threshing and separating mechanism 26 are collected and transported rearwardly by the conveyor 40 already referred to and which is shown in Figures 6 and 7 in more details. The conveyor 40 is housed in a self-supporting frame or housing 142 comprising a bottom wall 144, a semicircular front wall 146 and side walls 148 which are interconnected by a pair of transversely extending reinforcement beams 150. The conveyor 40, in the form of an endless chain and slat apron conveyor, comprises two transversely spaced chains 152, each thereof being provided proximate to a respective side wall 148 and respectively being extended over a pair of sprockets 154 supported by transversely oriented, spaced apart shafts 156 and 157. At equidistant spacings along the length of each chain 152, transversely extending, angled slats 158 are attached to links 159 furnished with a supporting surface 160. The front face of each slat 158 is fitted with a flexible strip 162 operable to engage the grain and chaff material .

The conveyor 40 is driven in a clockwise direction as seen in Figure 1, or otherwise said, the conveyor 40 is of the so called "overshot" type which means that the crop is conveyed at the upper side thereof. To this end, a drag board 164, spanning the total width of the conveyor 40 and covering the shafts 156 and 157 with bent end portions 166, is rigidly attached to the beams 150 in order to form a stationary, upwardly and rearwardly inclined floor over which the crop is urged by the impelling action of the strips 162. Said end portions 166 prevent contact between the transported crop material and the shafts 156, 157 in order to keep the latter clean even under adverse harvesting conditions, whereby the grain and chaff material may be mixed with wet and sticky particles of soil and seeds of weed. It has been experienced that under such harvesting conditions, also the drag board 164 is not prone of contamination as the flexible strips 162 sweep the upper surface thereof while transporting the crop.

The distance between successive strips 162 on the one hand and the height of these strips 162 on the other hand have been chosen in relation to as well the fore-and-aft inclination of the conveyor 40 (which is approximately 45°) as the drive speed thereof for optimizing the transport capacity of the arrangement under various operating conditions.

The shaft 157 at the lower, receiving end of the conveyor 40, does not rotate during operation and is fixedly supported by brackets 167, slidably attached to the side walls 148 by intermediary of a conventional tensioning mechanism (not shown) for taking up eventual stretch of the chains 152. As the shaft 157 is stationary, the corresponding sprockets 154 are rotatably carried thereon. Contrary thereto, the upper shaft 156 at the discharge end of the conveyor 40 imparts rotation to the latter and therefore the corresponding sprockets are fixedly connected thereto. Brackets 168, rotatably supporting the shaft 156, are incorporated in the side walls 148 of the conveyor housing 142 and, in turn, are held by further brackets 170 united with opposite side members of the combine frame 12. A stub shaft 172, having a conical portion 173 and a threaded end 174, is screwed into a receiving seat provided in the shaft 156 at one side thereof. A sprocket 176, which is fitted on the stub shaft 172, is incorporated in a drive train (not shown) of the combine harvester for driving the conveyor 40 at a speed of approximately 1 m/sec. As both lateral sides of the conveyor 40 are each others mirror image, except for what the drive arrangement 172, 176 is concerned, only the side thereof containing said drive arrangement 172, 176 has been shown in Figure 7.

The brackets 168 supporting the upper shaft 156 are slidably received by the brackets 170 enabling the conveyor 40 to be pivoted as a unitary structure around the coincident axis of the shaft 156 between an operative, material receiving position and an inoperative, retracted position, respectively shown in full and phantom lines in Figure 6. To ease the foregoing pivoting manoeuvre on the part of the combine operator, a screw jack 178 or any other type of suitable actuator is interconnected between a rigid transverse beam 180 of the combine frame 12, located at the back side of the conveyor 40, and an anchoring point proximate to the lowermost part of the conveyor housing 142; the screw jack 178 being operable to change the relative position of said housing 142 by being retracted or extended from an easy accessible location at the side of the combine harvester 10. Although additional locking means for securing the housing 142 in one of its extreme positions are not really required since the screw jack 178 can be blocked in any desired position, they nevertheless may be provided to further improve safety. For pivoting the housing 142 back and forth between operative and inoperative positions, it is unnecessary to disconnect the drive to the conveyor 40 therefrom as the housing 142 is pivoted around the axis of the drive shaft 156.

It will be appreciated from Figure 7 that the combine frame 12 transversely extends beyond the conveyor housing 142 and hence encloses the latter. Provided that the drive shaft 156 is deprived from its drive arrangement 172, 176, the conveyor 40 can be slid into the combine frame 12 as a unit, whereafter the brackets 170 are partially inserted through apertures in said frame 12 for receiving the brackets 168 and hence supporting the complete conveyor 40. Once the conveyor 40 in place, the stub shaft 172, carrying the sprocket 176, is screwed into the shaft 156 for drivingly connecting the latter to a drive arrangement of the combine harvester, as already mentioned. Care is taken that the sense of rotation for mounting the stub shaft 172 into the shaft 156 on the one hand and the normal sense of rotation of the conveyor 40 on the other hand are identical, in order to prevent that the stub shaft 172 would get unscrewed during operation of the conveyor 40.

Flexible strips (not shown) seal off any eventual apertures which may exist between the lateral sides of the conveyor housing 142, when in the grain receiving position, and the inner lateral sides of the combine frame 12, the foregoing to avoid any loss of grain therethrough during harvesting operation. The upper transverse end of the housings front wall 146 engages a sealing strip 182 attached to a slanting plate 183 fixed to the traction beam 184 of the harvester 10. Inspection cover means, in the form of an inspection door 186, are pivotally attached at 187 to the traction beam 184; said door 186, when in a closed position, extending in alignment with the plate 183 towards the lowermost edge of the stone trap 116 and held in that position by latch means which are not shown.

At the discharge end 188 of the conveyor 40, a reception plate 90 is operable to guide grain and chaff material issuing from said conveyor 40 towards the cleaning apparatus 42, comprising a.o. a conventional corrugated grain pan 192 and conventional sieves 44. The complete cleaning apparatus 42 is supported by a generally rectangular sub frame 194 which is pivotally mounted at its forward and rearward ends (only the forward end 195 being indicated) on the frame 12 of the combine harvester 10. When crop is being harvested on transversely inclined ground, position control means (not shown) are operable to automatically pivot the sub frame 194 so as to maintain the cleaning apparatus 42 horizontal, as seen in a transverse direction. For more details on this self-levelling cleaning apparatus, reference is made to GB-B-2.052.238.

As best can be observed in Figure 6, the overall configuration of the threshing and separating means 26, the cleaning apparatus 42 and the intermediate conveyor 40 displays the following peculiar features. As a result of the fact that the inlet gap 62 of the concave means 32 is located proximate to the horizontal median plane of the threshing cylinder 38, harvested crop material has to be fed in from an upward location. Taking account of route regulations which prescribe the maximum overall dimensions of mobile machinery using public roads and considering further that the grain tank 48 is mainly positioned above the threshing means 26, the foregoing way of feeding crop material to the cylinder 38 results in a configuration whereby the latter is mounted considerably lower in the combine frame 12 when compared to conventional combine harvesters, in which the layer of crop is fed to the thresher drum in a nearly horizontal direction. All this implies that grain and chaff material separated through the concave means 32 has to be collected at a rather low level before conveying it rearwardly to the cleaning mechanism.

Considering said cleaning mechanism 42, it already has been explained that the cleaning mechanism as a unitary structure is pivotable around a fore-and-aft extending axis for permitting said structure to be pivoted to a substantially horizontal position, when the combine harvester is transversely inclined relative to the vertical. It readily will be appreciated that during pivotal movement of the cleaning mechanism 42 from a non-pivoted position to an extreme pivoted position, the longitudinally extending sides of said cleaning mechanism 42 travel a considerable distance along the interior of the combine frame 12, demanding ample free space above the cleaning mechanism for allowing unobstructed swivelling thereof. This also implies that the stationary discharge end 188 of the conveyor 40 has to surmount the grain receiving front of the grain pan 192 considerably in order to avoid interference therebetween when operating on steep side hills and to ensure that no part of the grain pan front, irrespective of its relative position, may surmount said discharge end 188.

Concluding from the foregoing, separated grain and chaff material has to be conveyed from a level lower than conventional on the one hand to a level higher than conventional on the other hand. This problem has been solved by the configuration of Figure 6 in which the threshing cylinder 28 with its cooperating concaves 94 and 96 are disposed at least in part in a kind of transversely extending V-shaped trough 196, which is defined at its front side by the stone trap 116, the inspection door 186 and the slanting plate 183 and at its rear side by the conveyor 40. The slanting front side of the trough 196 is operable to direct any separated material which falls thereon towards the lowermost material receiving end of the conveyor 40, which transfers this material, together with material directly received from the concaves 94 and 96, upwardly and rearwardly towards the front of the cleaning mechanism 42.

The interior of the trough 196 and hence the threshing and separating means 26, in particular the threshing cylinder 28 and the concave means 32, and also the grain transporting side of the conveyor 40, are readily accessible for servicing from different sides of the trough 196 by means already referred to above. Indeed, by pivoting the conveyor 40 towards its retracted position abutting thereby the transverse frame beam 180, the rearward side of the trough is partially opened at its lowermost end, creating an aperture between the slanting plate 183 at the back side of the traction beam 184 and the lower part of the conveyor 40. The semicircular extending concaves 94 and 96 thereby become readily accessible in a generally vertical, upward direction. The lower part of the threshing cylinder 28 can be inspected through the meshes of the concaves 94 and 96 or may be reached for eventual repair by removing said concaves 94,96.

Access to the interior of the trough 196 further may be enabled by pivoting the inspection door 186 in the front side thereof to an open position, as indicated in phantom in Figure 6, whereby the traction beam 184 serves as an abutment for said door 186 so that the latter is maintained in a horizontal position, forming a kind of working platform for the operator on which tools can be stored near at hand. Alternatively, the inspection door 186 detachably may be connected to the traction beam 184 enabling the complete removal thereof.

Access to the threshing means 26 thus also can be gained from between the traction beam 184 and the feeder house 15, preferably with the latter in its raised, inoperative position. Accessibility through the front side of the trough is still further improved by removing the stone trap 116, what simply can be done by unlatching the latch member 136 and extracting the keys 132 from the stone trap supporting brackets 129. In a preferred embodiment, the crop detaining element 82 is also detachably supported by the combine frame 12 so that after removal of said element 82 also the discharge end of the crop elevator 24 and the deflector beater 38 easily can be reached.

Alternative embodiments of the stone trap 116 and the inspection door 186 are shown in Figure 8. In this arrangement, the inspection door 186 does not stop short of the bottom edge of the stone trap 116, but comprises an extended plate 197 therebehind which engages an upper surface of the transition beam 104. Well considered, the plate 197 effectively substitutes the bottom wall 122, 124 of the stone trap 116 as depicted in Figure 4. The alternative stone trap 116 therefore only needs a simplified structure comprising in essence the side walls 127 and the front plate 118, which has been enveloped around and fixedly attached to the pivot shaft 128.

The arrangement of Figure 8 provides several advantages. When the stone trap front plate 118 is pivoted to a stone dumping position, the plate 197 remains in its engaged position with the transition beam 104, as such preventing that stones or other foreign objects could fall into the gap between the stone trap pivot shaft 128 and said beam 104 and thus would get mixed with separated grain on the grain conveyor 40. The inspection door 186 in its alternative form does not require latch means for securing it in a closed position as the transverse bottom edge of the stone trap 116 prevents the door 186 from opening. On the one hand, this could be seen as a disadvantage as for enabling opening the door 186, the stone trap 116 first has to be removed. On the other hand however, the stone trap 116 is relatively light, and thus removal thereof is easily and rapidly accomplished, whereafter the door 186 falls open automatically. Accordingly, by unlatching only one element, being the stone trap 116, a full access through the front side of the trough 196 is obtained.

It thus readily will be appreciated that the threshing and separating means 26, in particular the deflector beater 38, the concaves 94,96 and the threshing cylinder 28 are easily accessible thanks to the partial incorporation of these elements in the trough 196 of which as well the front side as the rear side can be opened and/or removed. All this further implies that the threshing means become accessible from different sides at the same time. Consequently, when the nature of eventual servicing or repair would require the combined effort of several people, the trough 196 may be opened at both transverse sides so that those people simultaneously can gain access into the trough 196 from different sides allowing them to help each other.

## Claims

1. A combine harvester (10) comprising :
- threshing and separating means (26) including a rotatable threshing drum (28) and a cooperating concave (32) for threshing harvested crop material therebetween and separating wanted grain together with chaff material through the concave (32),
- conveyor means (40) for receiving the separated grain and chaff material from the threshing and separating means (26) and conveying this separated grain and chaff material towards a further processing means (42) of the combine harvester (10); said conveyor means (40) including an endless apron conveyor (40) extending around two spaced apart axes (156, 157), and
characterised in that
- said apron conveyor (40) is installed in a self-supporting housing (142), and
- said apron conveyor (40) and said housing (142) are pivotable as a unit around at least one of said axes (156, 157) between an operative, material receiving position and an inoperative, retracted position; the arrangement being such that, in the inoperative, retracted position the threshing and separating means (26) are readily accessible for servicing.

2. A combine harvester according to claim 1 characterised in that :
- the endless apron conveyor (40) has its material receiving end generally vertically below the threshing and separating means (26) and is inclined rearwardly and upwardly relative to the fore-and-aft extending axis of the harvester from said material receiving end to a material discharge end (188),
- said spaced apart axes (156, 157) extend transversely generally at said receiving and discharge ends (-, 188) and
- the apron conveyor (40) is pivotable around the transverse axis (156) generally at the apron conveyor discharge end (188); the arrangement being such that, upon pivoting said apron conveyor (40) around its uppermost transverse axis (156) the threshing and separating means (26) are readily accessible in a generally vertical, upward direction.

3. A combine harvester according to claims 1 or 2 characterized in that the threshing drum (28) and cooperating concave (32) are housed at least partially in a transversely extending trough (196) which, at least in part, is defined by said apron conveyor (40).

4. A combine harvester according to claim 3 characterized in that :
- the transversely extending trough (196) is generally V-shaped and comprises a front side and a rear side as seen in the direction of travel of the combine harvester;
- said front side is located proximate to a front traction beam (184) of the machine and is defined, in consecutive order, by a stone trap (116) for collecting stones contained in the harvested crop material, an inspection door (186) and a plate (183); said three elements (116,186 and 183) being generally aligned with each other and slanting downwardly towards the material receiving end of the apron conveyor (40); and
- said rear side is defined by said apron conveyor (40); and the arrangement being such that crop material separated through a front part of the threshing concave (32) impinges on the front side of said trough (196) and falls downwardly therealong to the material receiving end of the conveyor (40) while crop material separated through the remainder of said concave (32) falls directly onto said conveyor (40).

5. A combine harvester according to claim 4 characterized in that the threshing and separating means (26) are accessible from a position forwardly of said traction beam (184) through the inspection door (186) and/or from a position rearwardly thereof through an access inbetween said traction beam (184) and the retracted conveyor (40).

6. A combine harvester according to any of the preceding claims characterized in that the self-supporting housing (142) comprises:
- a bottom wall (144),
- a transversely extending semicircular front wall (146),
- longitudinally extending side walls (148), and
- transversely oriented reinforcement beams (150) which interconnect the side walls (148) for improving the rigidity of the housing (142); the arrangement being such that as well the side of the housing (142) facing in the direction of the threshing drum (28) as the side (188) adjacent to said further processing means (42) are open.

7. A combine harvester according to claim 6 characterized in that the combine frame (12), as seen in a transverse cross section, extends beyond and encloses the self-supporting housing (142) of the conveyor (40), when in said operative position, whereby the spacings inbetween the lateral sides of the frame (12) and the housing (142) are sealed off with flexible sealing strips.

8. A combine harvester according to claim 7 characterized in that :
- a first pair of brackets (168) is fixedly connected to the self-supporting housing (142) for rotatably supporting a shaft (156), coincident with said uppermost axis (156); and
- a further pair of brackets (170) is fixedly connected to the combine frame (12) and is operable in turn to rotatably support said first pair of brackets (168); the arrangement being such that said first pair of brackets (168) is rotated relative to said further pair of brackets (170) upon pivoting the apron conveyor (40) around its uppermost axis (156).

9. A combine harvester according to claim 8 characterized in that drive means (176) are operatively connected to said shaft (156) for driving the conveyor (40); said drive means (176) being provided coaxially with said shaft (156) enabling the conveyor (40) to be pivoted around the coincident axis (156) without disconnecting the drive to said drive means (176).

10. A combine harvester according to any of the claims 7 to 9 characterized in that an actuator (178) extends between an anchoring point provided at the self-supporting housing (142) proximate to the material receiving end of the conveyor (40) and a housing member (180) provided rearwardly of said conveyor (40); said actuator (178) being operable to pivot the conveyor (40) between its operative and inoperative positions and secure the same in either one of said extreme positions.

11. A combine harvester according to any of the preceding claims characterized in that the apron conveyor (40) comprises fore-and-aft extending, transversely spaced chains (152) which are interconnected by transversely oriented slats (158), attached to support links (159) and provided at equidistant spacings along the length of the chains (152); each of said slats (158) carrying a flexible strip (162) operable to engage the separated grain and chaff material.

12. A combine harvester according to claim 11 characterized in that :
- said chains (152) extend around said spaced apart axes (156 and 157) proximate to the side walls (148) of the self-supporting housing (142), and
- a drag board (164) is provided which spans the distance between said axes (156,157) ; the flexible strips (162) of said conveyor (40) cooperating with said drag board (164) for conveying crop material therealong.

13. A combine harvester according to claim 12 characterized in that the sense of rotation of the apron conveyor (40) is such that the material engaging strips (162) are urged across the drag board (164) from said material receiving end towards said material discharge end (188) at the side thereof facing in the direction of the threshing drum (28).

14. A combine harvester according to any of the claims 2 to 13 characterized in that the threshing drum (28) comprises a rotational centre (93) which is positioned, on the one hand, generally vertically above the material receiving end of the apron conveyor (40), when in said operative position, and, on the other hand, generally at the same horizontal level as the material discharge end (188).

15. A combine harvester according to any of the preceding claims characterized in that the concave (32) is positioned substantially inbetween the threshing drum (28) and the apron conveyor (40) and extends around said drum (28) over an arc of at least 100°.

## Patentansprüche

1. Mähdrescher (10) mit:
- Dresch- und Trenneinrichtungen (26), die eine in Drehung versetzbare Dreschtrommel (28) und einen damit zusammenwirkenden Dreschkorb (32) zum Dreschen von geerntetem Erntematerial zwischen diesen Teilen und zur Abtrennung der gewünschten Körner zusammen mit dem Spreumaterial durch den Dreschkorb (32) hindurch einschließen,
- Fördereinrichtungen (40) zur Aufnahme des abgetrennten Körner- und Spreumaterials von den Dresch- und Trenneinrichtungen (26) und zum Fördern dieses abgetrennten Körner- und Spreumaterials in Richtung auf weitere Verarbeitungseinrichtungen (42) des Mähdreschers (10), wobei die Fördereinrichtungen (40) einen endlosen Gurtförderer (40) einschließen, der sich um zwei mit Abstand voneinander angeordnete Achsen (156, 157) erstreckt,
dadurch gekennzeichnet, daß
- der Gurtförderer (40) in einem selbsttragenden Gehäuse (142) eingebaut ist, und
- der Gurtförderer (40) und das Gehäuse (142) als eine Einheit um zumindestens eine der Achsen (156, 157) zwischen einer das Material aufnehmenden Betriebsstellung und einer zurückgezogenen unwirksamen Position verschwenkbar sind, wobei die Anordnung derart ist, daß in der unwirksamen zurückgezogenen Position die Dresch- und Trenneinrichtungen (26) für eine Wartung leicht zugänglich sind.

2. Mähdrescher nach Anspruch 1,
dadurch gekennzeichnet, daß:
- der endlose Gurtförderer (40) mit seinem das Material aufnehmende Ende allgemein vertikal unterhalb der Dresch- und Trenneinrichtungen (26) angeordnet ist und in Rückwärtsrichtung und nach oben gegenüber der sich in Längsrichtung erstreckenden Achse des Mähdreschers von dem das Material aufnehmenden Ende zu einem Materialabgabeende (188) hin geneigt ist.
- die mit Abstand voneinander angeordneten Achsen (156, 157) sich in Querrichtung allgemein an den Aufnahme- und Abgabeenden (-, 188) erstrecken, und
- der Gurtförderer (40) um die Querachse (156) allgemein an dem Gurtförderer-Abgabeende (188) verschwenkbar ist, wobei die Anordnung derart ist, daß nach dem Verschwenken des Gurtförderers (40) um seine am weitesten oben liegende querverlaufende Achse (156) die Dresch- und Trenneinrichtungen (26) in einer allgemein vertikalen, nach oben gerichteten Richtung leicht zugänglich sind.

3. Mähdrescher nach Anspruch 1 oder 2,
dadurch gekennzeichnet, daß die Dreschtrommel (28) und der damit zusammenwirkende Dreschkorb (32) zumindestens teilweise in einer sich in Querrichtung erstreckenden Wanne (196) untergebracht sind, die zumindestens teilweise durch den Gurtförderer (40) begrenzt ist.

4. Mähdrescher nach Anspruch 3,
dadurch gekennzeichnet, daß:
- die sich in Querrichtung erstreckende Wanne (196) allgemein V-förmig ist und eine Vorderseite und eine Hinterseite bei Betrachtung in der Bewegungsrichtung des Mähdreschers aufweist,
- die Vorderseite in der Nähe eines vorderen Zugträgers (184) der Maschine angeordnet ist und in aufeinanderfolgender Reihenfolge durch eine Steinfalle (116) zum Sammeln von in dem geernteten Erntematerial enthaltenen Steinen, eine Inspektionsklappe (186) und eine Platte (183) gebildet ist, wobei die drei Elemente (116, 186 und 183) allgemein miteinander ausgerichtet sind und nach unten in Richtung auf das das Material aufnehmende Ende des Gurtförderers (40) geneigt sind, und
- die Rückseite durch den Gurtförderer (40) gebildet ist, wobei die Anordnung derart ist, daß durch den vorderen Teil des Dreschkorbes (32) hindurch abgetrenntes Erntematerial auf die Vorderseite der Wanne (196) auftrifft und entlang dieser Seite auf das das Material aufnehmende Ende des Förderers (40) fällt, während durch den verbleibenden Teil des Dreschkorbes (32) hindurch abgetrenntes Material direkt auf den Förderer (40) fällt.

5. Mähdrescher nach Anspruch 4,
dadurch gekennzeichnet, daß die Dresch- und Trenneinrichtungen (26) von einer Position vor dem Zugträger (184) durch eine Inspektionsklappe (186) und/oder von einer Position hinter diesem Zugträger durch einen Zugang zwischen dem Zugträger (184) und dem zurückgezogenen Förderer (40) zugänglich sind.

6. Mähdrescher nach einem der vorhergehenden Ansprüche,
dadurch gekennzeichnet, daß das selbsttragende Gehäuse (142) folgende Teile umfaßt:
- eine Bodenwand (144),
- eine sich in Querrichtung erstreckende halbkreisförmige Vorderwand (146),
- sich in Längsrichtung erstreckende Seitenwände (148), und
- in Querrichtung ausgerichtete Verstärkungsträger (150), die die Seitenwände (148) miteinander verbinden, um die Steifigkeit des Gehäuses (142) zu verbessern, wobei die Anordnung derart ist, daß sowohl die Seite des Gehäuses (142), die in Richtung auf die Dreschtrommel (28) gerichtet ist, als auch die Seite (188) benachbart zu den weiteren Verarbeitungseinrichtungen (142) offen ist.

7. Mähdrescher nach Anspruch 6,
dadurch gekennzeichnet, daß sich der Mähdrescher-Rahmen (12) bei Betrachtung in einem querverlaufenden Querschnitt über das selbsttragende Gehäuse (142) des Förderers (40) hinaus erstreckt und dieses umschließt, wenn sich dieser in der Betriebsstellung befindet, wobei die Abstände zwischen den Seiten des Rahmens (12) und dem Gehäuse (142) durch flexible Abdichtstreifen abgedichtet sind.

8. Mähdrescher nach Anspruch 7,
dadurch gekennzeichnet, daß:
- ein erstes Paar von Haltearmen (168) fest mit dem selbsttragenden Gehäuse (142) verbunden ist, um eine mit der am weitesten oben liegenden Achse (156) zusammenfallende Welle (156) zu lagern, und
- ein weiteres Paar von Haltearmen (170) fest mit dem Mähdrescher-Rahmen (12) verbunden und seinerseits betreibbar ist, um das erste Paar von Haltearmen (168) drehbar zu lagern, wobei die Anordnung derart ist, daß das erste Paar von Haltearmen (168) gegenüber dem weiteren Paar von Haltearmen (170) gedreht wird, wenn der Gurtförderer (40) um seine am weitesten oben liegende Achse (156) verschwenkt wird.

9. Mähdrescher nach Anspruch 8,
dadurch gekennzeichnet, daß Antriebseinrichtungen (176) betriebsmäßig mit der Welle (156) verbunden sind, um den Förderer (40) anzutreiben, und daß die Antriebseinrichtungen (176) koaxial zu der Welle (156) vorgesehen sind, was es ermöglicht, daß der Förderer (40) um die damit zusammenfallende Achse (156) verschwenkt werden kann, ohne den Antrieb an die Antriebseinrichtungen (176) zu trennen.

10. Mähdrescher nach einem der Ansprüche 7 bis 9,
dadurch gekennzeichnet, daß sich ein Stellglied (178) zwischen einem Verankerungspunkt, der an dem selbsttragenden Gehäuse (142) in der Nähe des das Material aufnehmenden Endes des Förderers (40) vorgesehen ist, und einem Gehäuseteil (180) erstreckt, das rückwärts von dem Förderer (40) angeordnet ist, wobei das Stellglied (178) betreibbar ist, um den Förderer (40) zwischen einer Betriebsstellung und seiner unwirksamen Stellung zu verschwenken und ihn in jeder dieser Endstellungen festzulegen.

11. Mähdrescher nach einem der vorhergehenden Ansprüche,
dadurch gekennzeichnet, daß der Gurtförderer (40) sich in Längsrichtung erstreckende, mit Querabstand angeordnete Ketten (152) umfaßt, die durch in Querrichtung ausgerichtete Leisten (158) miteinander verbunden sind, die an Haltegliedern (159) befestigt und unter gleichen Abständen entlang der Länge der Ketten (152) vorgesehen sind, wobei jede der Leisten (158) einen flexiblen Streifen (162) trägt, der für einen Eingriff mit dem abgetrennten Körner- und Spreumaterial betreibbar ist.

12. Mähdrescher nach Anspruch 11,
dadurch gekennzeichnet, daß
- die Ketten (152) sich um die mit Abstand angeordneten Achsen (156, 157) in der Nähe der Seitenwände (148) des selbsttragenden Gehäuses (142) erstrecken, und
- ein Kratzboden (164) vorgesehen ist, der den Abstand zwischen den Achsen (156, 157) überspannt, wobei die flexiblen Streifen (162) auf dem Förderer (40) mit dem Kratzboden (164) zusammenwirken, um das Erntematerial entlang dieses Kratzbodens zu fördern.

13. Mähdrescher nach Anspruch 12,
dadurch gekennzeichnet, daß die Drehrichtung des Gurtförderers (40) derart ist, daß die mit dem Material in Eingriff kommenden Streifen (162) über den Kratzboden (164) von dem das Material aufnehmenden Ende in Richtung auf das Materialabgabeende (188) an der Seite hiervon gedrückt werden, die in Richtung auf die Dreschtrommel (28) gerichtet ist.

14. Mähdrescher nach einem der Ansprüche 2 bis 13,
dadurch gekennzeichnet, daß die Dreschtrommel (28) einen Drehmittelpunkt (93) aufweist, der einerseits allgemein in Vertikalrichtung oberhalb des das Material aufnehmenden Endes des Gurtförderers (40), wenn sich dieser in der Betriebsstellung befindet, und andererseits allgemein in der gleichen horizontalen Höhenlage angeordnet ist, wie das Materialabgabeende (188).

15. Mähdrescher nach einem der vorhergehenden Ansprüche,
dadurch gekennzeichnet, daß der Dreschkorb (32) im wesentlichen zwischen der Dreschtrommel (28) und dem Gurtförderer (40) angeordnet ist und sich um die Trommel (28) über einen Bogen von zumindestens 100° erstreckt.

## Revendications

1. Moissonneuse-batteuse (10) comprenant :
- des moyens de battage et de séparation (26) composés d'un tambour rotatif de battage (28) et d'un contre-batteur associé (32), pour le battage du matériau de récolte entre les deux et pour en séparer le grain désiré et la balle au travers du contre-batteur (32),
- un moyen de transport par transporteur (40) pour la récupération du matériau séparé, composé du grain et de la balle, issu des moyens de battage et de séparation (26), et pour le transport de ce matériau séparé vers des moyens de séparation ultérieurs (42) de la moissonneuse-batteuse (10); ledit moyen de transport comprenant une bande transporteuse sans fin (40) s'étendant entre deux arbres distincts séparés (156, 157), et
caractérisée en ce que:
- ladite bande transporteuse (40) est installée dans un logement auto-portant (142), et que
- ladite bande transporteuse (40) et ledit logement (142) sont pivotables en tant qu'unité autour d'au moins un desdits arbres (156, 157) entre une position de fonctionnement et de réception de matériau, et une position hors service escamotée; le système étant conçu de telle manière que, dans la position hors service escamotée, les moyens de battage et de séparation (26) sont aisément accessibles pour l'entretien.

2. Moissonneuse-batteuse selon la revendication 1, caractérisée en ce que :
- la bande transporteuse sans fin (40) a son extrémité de réception de matériau généralement située en-dessous des moyens de battage et de séparation (26) sont et adopte une inclinaison vers le haut d'avant en arrière suivant l'axe longitudinal de la moissonneuse-batteuse, à partir de son extrémité de réception de matériau jusqu'à son extrémité de déchargement de matériau (188),
- lesdits arbres distincts séparés (156, 157) se prolongent transversalement aux dites extrémités de réception (-, 188) et
- le transporteur (40) est pivotable autour de l'axe transversal (156) généralement à l'extrémité de déchargement du transporteur (188); la disposition étant telle que, lors du pivotement dudit transporteur (40) autour de son arbre transversal supérieur (156), les moyens de battage et de séparation sont aisément accessibles dans une direction généralement verticale vers le haut.

3. Moissonneuse-batteuse selon la revendication 1 ou 2, caractérisée en ce que le tambour de battage (28) et le contre-batteur associé (32) sont logés au moins partiellement dans une auge (196) se prolongeant transversalement qui, du moins en partie, est définie par ledit transporteur (40).

4. Moissonneuse-batteuse selon la revendication 3, caractérisée en ce que :
- l'auge à prolongement transversal (196) est généralement en forme de V et comporte une face frontale et une face arrière suivant la direction de transport de la moissonneuse-batteuse;
- ladite face frontale est située à proximité d'une barre de traction (184) de la machine et est définie, dans l'ordre, par un épierreur (116) destiné à retenir les pierres contenues dans le matériau de récolte, une porte d'inspection (186) et une plaque (183); lesdits trois éléments (116, 186 et 183) étant généralement alignés entr'eux et en oblique vers le bas, dirigés vers l'extrémité de réception du transporteur (40); et
- ladite face arrière est définie par ledit transporteur (40); et la disposition est telle que le matériau de récolte séparé au travers de la partie frontale du contre-batteur (32) est extrait à l'aplomb de la face frontale de ladite auge (196) et tombe vers le bas le long de celle-ci vers l'extrémité de réception du transporteur (40), tandis que le matériau de récolte séparé à travers le restant dudit contre-batteur (32) tombe directement sur ledit transporteur (40).

5. Moissonneuse-batteuse selon la revendication 4 caractérisée en ce que les moyens de battage et de séparation (26) sont accessibles à partir d'une position en avant de ladite barre de traction (184) au travers de la porte d'inspection (186) et/ou d'une position arrière de la barre de traction au travers d'un accès situé entre ladite barre de traction (184) et le transporteur (40) escamoté.

6. Moissonneuse-batteuse selon l'une quelconque des revendications précédentes, caractérisée en ce que le logement auto-portant (142) comprend:
- une paroi inférieure (144),
- une paroi frontale semi-circulaire (146) se prolongeant transversalement,
- des parois latérales (148) se prolongeant longitudinalement, et
- des barres de renforcement (150) orientées transversalement et reliant les parois latérales (148) pour augmenter la rigidité du logement (142); la disposition étant telle que, tant la face du logement (142) dirigée vers le tambour de battage (28) que la face (188) adjacente aux dits moyens supplémentaires de traitement (42) sont ouvertes.

7. Moissonneuse-batteuse selon la revendication 6 caractérisée en ce que le châssis de la machine (12), vu dans une section transversale, est prolongé et entoure le logement auto-portant (142) du transporteur (40), lors de ladite position de fonctionnement, où les interstices entre les faces latérales du châssis (12) et le logement (142) sont refermées par des couvre-joints flexibles.

8. Moissonneuse-batteuse selon la revendication 7, caractérisée en ce:
- qu'une première paire de consoles (168) est fixée au logement auto-portant (142) pour le soutien de la rotation d'un arbre (156), correspondant au dit arbre supérieur (156); et
- qu'une paire supplémentaire de consoles (170) est fixée au châssis de la moissonneuse-batteuse (12) et est équipée pour fournir un support de rotation à ladite première paire de consoles (168); la disposition étant telle que ladite première paire de consoles (168) tourne par rapport à ladite paire supplémentaire de consoles (170) lors du pivotement du transporteur (40) autour de son arbre supérieur (156).

9. Moissonneuse-batteuse selon la revendication 8, caractérisée en ce que les moyens d'entraînement (176) sont reliés fonctionnellement au dit arbre (156) pour l'entraînement du transporteur (40); lesdits moyens d'entraînement (176) étant disposés coaxialement avec ledit arbre (156) et permettant au transporteur (40) de pivoter autour de l'axe correspondant (156) sans devoir déconnecter la transmission desdits moyens d'entraînement (176).

10. Moissonneuse-batteuse selon l'une quelconque des revendications 7 à 9, caractérisée en ce qu'un mécanisme de commande (178) s'étend entre un point d'ancrage proche de l'extrémité de réception de matériau du transporteur et fixé sur le logement auto-portant (142), et une traverse du châssis (180) située à l'arrière du transporteur (40); ledit mécanisme de commande étant utilisé pour faire pivoter le transporteur (40) entre ses positions de fonctionnement et hors service et pour le maintenir dans l'une quelconque desdites positions extrêmes.

11. Moissonneuse-batteuse selon l'une quelconque des revendications précédentes, caractérisée en ce que le transporteur (40) comprend des chaînes espacées transversalement (152), se prolongeant de l'avant vers l'arrière, qui sont reliées entre elles par des lattes (158) orientées transversalement, fixées à des membres intermédiaires (159) et prévues à espacements équidistants le long de la longueur des chaînes (152); chacune desdites lattes (158) portant une bande flexible (162) destinée à entraîner le matériau séparé constitué de grain et de balle.

12. Moissonneuse-batteuse selon la revendication 11, caractérisée en ce que :
- lesdites chaînes (152) passent autour desdits arbres distincts séparés (156 et 157) à proximité des parois latérales (148) du logement auto-portant (142), et
- un panneau de recouvrement (164) est prévu pour recouvrir l'espace entre lesdits arbres (156, 157); les bandes flexibles (162) dudit transporteur (40) sont associées au dit panneau de recouvrement (164) pour permettre le transport du matériau récolté le long du transporteur.

13. Moissonneuse-batteuse selon la revendication 12, caractérisée en ce que le sens de rotation du transporteur (40) est tel que les bandes d'entraînement (162) du matériau sont comprimées contre le panneau de recouvrement (164) depuis l'extrémité de réception du matériau, en direction de l'extrémité de déchargement (188) sur la face orientée vers le tambour de battage (28).

14. Moissonneuse-batteuse selon l'une quelconque des revendications 2 à 13, caractérisée en ce que le tambour de battage (28) comporte un axe de rotation (93) qui est positionné, d'une part, généralement verticalement au-dessus de l'extrémité de réception de matériau du transporteur (40), lorsque celui-ci se trouve en position de fonctionnement, et, d'autre part, généralement au niveau horizontal de l'extrémité de déchargement de matériau (188).

15. Moissonneuse-batteuse selon l'une quelconque des revendications précédentes, caractérisée en ce que le contre-batteur (32) est positionné solidement entre le tambour de battage (28) et le transporteur (40) et occupe un arc d'au moins 100° autour dudit tambour (28).
